# EUROPÄISCHE PATENTANMELDUNG

(11) **EP 2 251 485 A2**
(43) Veröffentlichungstag der Anmeldung: **17.11.2010**
(21) Anmeldenummer: 10162072.2
(22) Anmeldetag: 06.05.2010
(51) Int. Cl.: E01B 3/34

(54) **Spannbetonschwelle und Verfahren zu ihrer Herstellung**

(30) Priorität: 07.05.2009 DE 202009006555 U
(71) Anmelder: RAIL.ONE GmbH, 92318 Neumarkt (DE)
(72) Erfinder: Spitzner, Gundolf, 90584 Allersberg (DE); Berns, Gerhard, 91781 Weißenburg (DE); Haban, Franz, 84160 Frontenhausen (DE)
(74) Vertreter: Simon, Josef

(57) **Zusammenfassung**

Spannbetonschwelle mit in Beton eingebetteten Spanndrähten, wobei die Spannbetonschwelle (10) aus gebrauchten Schwellen ausgebaute und recycelte Spanndrähte (1) aufweist.

## Beschreibung

Die Erfindung betrifft eine Spannbetonschwelle mit in Beton eingebetteten Spanndrähten.

Gleise von hoch beanspruchten Eisenbahnstrecken müssen erneuert werden, wenn die Abnutzung des Oberbaus, die sich an den Schienen, den Schienenbefestigungen, den Schwellen und am Schotter zeigt, ein zulässiges Maß überschritten hat. Normalerweise werden die verschlissenen Gleise rückgebaut und die Komponenten des Oberbaus durch neue ersetzt.

Ein Verfahren zur Sanierung einer Schienenfahrbahn ist aus der DE 10 2007 038 461 A1 bekannt. Bei diesem Verfahren ist vorgesehen, dass die Schienen von den Schwellen gelöst, die alten Schwellen ausgebaut und der Schotter aufgenommen, gesiebt und zwischengespeichert wird. Dieses Sanierungsverfahren kann kontinuierlich durchgeführt werden. Der alte Schotter wird dabei gereinigt, gesiebt, mit neuem Schotter gemischt und wieder eingebaut. Nach der Herstellung einer neuen Schottertragschicht werden Schwellen und Schienen montiert. Obwohl zumindest ein Teil des Schotters wieder verwendet werden kann, werden die ausgebauten alten Schwellen in einer Anlage gebrochen und in Fraktionen zerlegt, die lediglich als Betonschutt und Stahlschrott verwertbar sind.

Der Erfindung liegt daher die Aufgabe zugrunde, die beim Rückbau einer Eisenbahnstrecke gewonnenen recycelten Baustoffe einer höherwertigen Verwendung zuzuführen.

Zur Lösung dieser Aufgabe ist eine Spannbetonschwelle der eingangs genannten Art vorgesehen, die aus gebrauchten Schwellen ausgebaute und recycelte Spanndrähte aufweist.

Bei der erfindungsgemäßen Spannbetonschwelle werden recycelte Spanndrähte nicht lediglich als Stahlschrott verwertet, stattdessen werden die Spanndrähte bei der Herstellung neuer Betonschwellen verwendet. Das Verfahren ist daher wesentlich wirtschaftlicher im Vergleich zu bisherigen Recyclingverfahren für Spannbetonschwellen. Zumindest lassen sich auf diese Weise Spannbetonschwellen herstellen, die geringere Anforderungen erfüllen und zumindest für Nebengleise verwendet werden können.

Bei der erfindungsgemäßen Spannbetonschwelle kann es vorgesehen sein, dass die Spanndrähte an ihren Enden mit einem Gewinde versehen sind. Die recycelten Spanndrähte können eine glatte Oberfläche aufweisen, daneben sind auch profilierte Spanndrähte verwendbar.

Um den neuen Spannbetonschwellen eine Vorspannung zu verleihen, sind auf die beiden Gewinde an den Enden eines Spanndrahts Ankerplatten geschraubt. Eine Spannbetonschwelle weist dabei typischerweise vier Spanndrähte auf.

Eine weitere Vereinfachung und Verbesserung ergibt sich, wenn die Ankerplatten direkt, ohne Einsatz von Muttern oder dergleichen, gegen den Gewindeauslauf der Gewinde gekontert sind. In diesem Fall müssen lediglich die Enden der Spanndrähte an beiden Seiten mit dem Gewinde versehen werden, auf das dann die Ankerplatte aufgeschraubt und gekontert wird. Die Ankerplatte wird bis zum Gewindeauslauf auf das Gewinde des Spanndrahts geschraubt und anschließend gekontert, ohne dass weitere Befestigungsmittel erforderlich wären.

Die erfindungsgemäße Spannbetonschwelle lässt sich besonders wirtschaftlich im Umlaufverfahren mit Spätentschalung herstellen. Bei diesem Verfahren werden die Schwellen jeweils einzeln gespannt und einer Wärmebehandlung unterzogen, um das Aushärten des Betons zu beschleunigen.

Es sind auch Herstellungsvarianten der erfindungsgemäßen Spannbetonschwelle denkbar, bei denen ein Teil des recycelten Betonbruchs bei der Herstellung der Spannbetonschwellen verwendet wird. Dieser Betonbruch kann gewaschen und durch Sieben in Fraktionen zerlegt sein. Mittlere und gröbere Fraktionen des Betonbruchs können Split oder Kies ersetzen.

Daneben betrifft die Erfindung ein Verfahren zur Herstellung von Spannbetonschwellen.

Das erfindungsgemäße Verfahren umfasst die folgenden Schritte: Brechen von gebrauchten, ausgebauten Schwellen in einer Recyclinganlage, Trennen von Betonbruch und Spanndrähten, Wiederverwenden recycelter Spanndrähte bei der Herstellung neuer Spannbetonschwellen.

Vorzugsweise werden die Spanndrähte bei dem erfindungsgemäßen Verfahren an ihren Enden mit einem Gewinde versehen. Die an den Enden der Spanndrähte angebrachten Gewinde ermöglichen die Verschraubung von Ankerplatten auf beide Gewinde eines Spanndrahts.

Bei dem erfindungsgemäßen Verfahren wird es bevorzugt, dass die Ankerplatten direkt, ohne Einsatz von Muttern oder dergleichen, gegen den Gewindeauslauf der Gewinde gekontert werden.

Die Herstellung der Spannbetonschwellen ist besonders effizient, wenn sie im Umlaufverfahren mit Spätentschalung hergestellt werden. Im Umlaufverfahren durchlaufen die Formen verschiedene Stationen, an denen die einzelnen Verfahrensschritte wie Einsetzen der Spanndrähte in die Form, Spannen der Spanndrähte, Befüllen der Form mit Beton, Entspannen der Spanndrähte, Entschalen usw. durchgeführt werden.

Eine weitere Variante des erfindungsgemäßen Verfahrens sieht vor, dass ein Teil des recycelten Betonbruchs bei der Herstellung der Spannbetonschwelle verwendet wird. Dadurch wird die Menge des zu entsorgenden Betonschutts verringert, dessen Entsorgung ansonsten weitere Kosten verursachen würde.

Weitere Vorteile und Einzelheiten der Erfindung werden nachfolgend anhand eines Ausführungsbeispiels unter Bezugnahme auf die Zeichnungen erläutert. Die Zeichnungen sind schematische Darstellungen und zeigen:
- Fig. 1: einen Spanndraht für eine erfindungsgemäße Spannbetonschwelle;
- Fig. 2: eine vergrößerte Ansicht eines Endes des in Fig. 1 gezeigten Spanndrahts mit einer Ankerplatte;
- Fig. 3: einen Teil einer erfindungsgemäßen Spannbetonschwelle in einer Seitenansicht, und
- Fig. 4: einen Schnitt durch die in Fig. 3 gezeigte Spannbetonschwelle entlang der Linie IV-IV.

Bei dem Verfahren zur Herstellung der Spannbetonschwelle werden die Schwellen der "verbrauchten" Schienenfahrbahn demontiert, die Schienenbefestigungen entfernt und die Spannbetonschwellen in einer Recyclinganlage gebrochen. Der Betonbruch und die Spanndrähte werden getrennt. Die gebrauchten Spanndrähte werden bei der Herstellung neuer Spannbetonschwellen wiederverwertet, indem sie an ihren Enden mit einem Gewinde versehen werden.

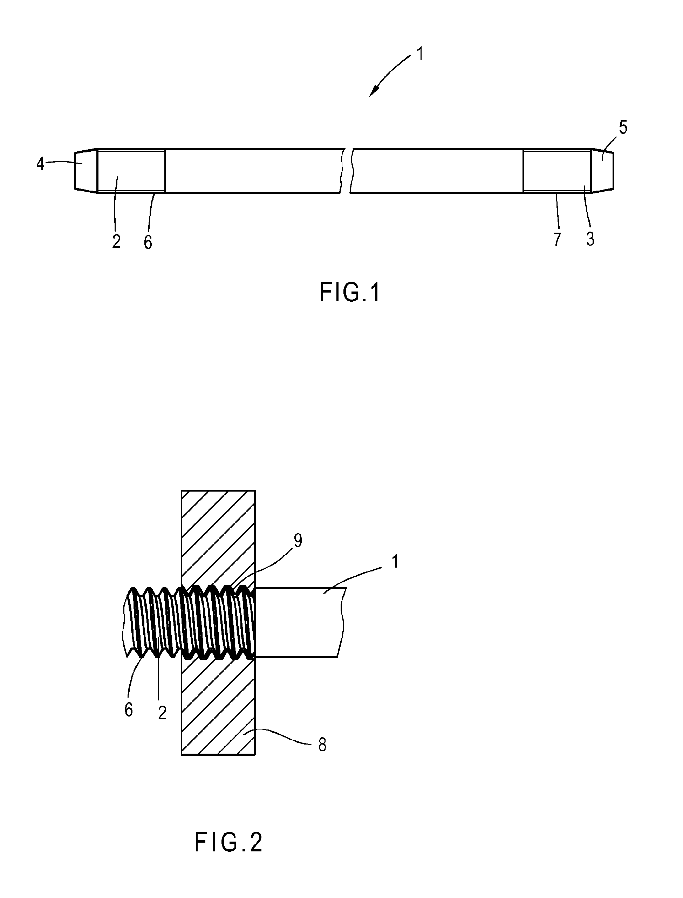

Fig. 1 zeigt einen Spanndraht 1, der an seinen Enden 2, 3 mit einer Fase 4, 5 und einem Gewinde 6, 7 versehen worden ist. Der Fasenwinkel beträgt 20°. In dem dargestellten Ausführungsbeispiel wird ein Sondergewinde M10,25x1,5 verwendet. Die nutzbare Länge des Gewindes beträgt ca. 28 mm. Das erwähnte Gewinde eignet sich für Spanndrähte mit einem Durchmesser von 9,5 mm. Bei Spanndrähten mit größerem oder kleinerem Durchmesser wird ein anderes, passendes Gewinde verwendet. Das Sondergewinde kann sowohl bei glatten Spanndrähten als auch bei profilierten Spanndrähten verwendet werden.

Fig. 2 zeigt ein Ende des Spanndrahts 1 in einer vergrößerten Darstellung. Das Ende 2 des Spanndrahts 1 ist mit dem Gewinde 6 versehen, auf das eine Ankerplatte 8 aufgeschraubt worden ist. Die quadratische oder viereckige Ankerplatte 8 besitzt ein zu dem Gewinde 6 passendes Innengewinde 9, sodass die Ankerplatte 8 auf das Gewinde 6 des Spanndrahts geschraubt werden kann. Um der herzustellenden Spannbetonschwelle eine Vorspannung zu verleihen, wird die Ankerplatte 8 bis zum Ende des Gewindes 6 aufgeschraubt, bis sie gekontert ist. Dies ist möglich, da das Gewinde 6 keinen Freistich aufweist. Die über die Ankerplatten nach außen überstehenden Gewindeenden werden zum Verschrauben von Zugspindeln genutzt. Über diese Zugspindeln werden die Spanndrähte z. B. mit hydraulischen Vierlingspressen gespannt und gegen eine stählerne Stahlform verankert. Nach dem Erhärten des Schwellenbetons in der Form werden die Zugspindeln herausgedreht, wodurch die Spannkraft der Spanndrähte über die Ankerplatten in den Beton der Spannbetonschwellen übergeht. Die auf diese Weise vorgespannten Spannbetonschwellen werden im Umlaufverfahren mit Spätentschalung hergestellt. Da dieses Verfahren an sich bekannt ist, wird es an dieser Stelle nicht näher erläutert.

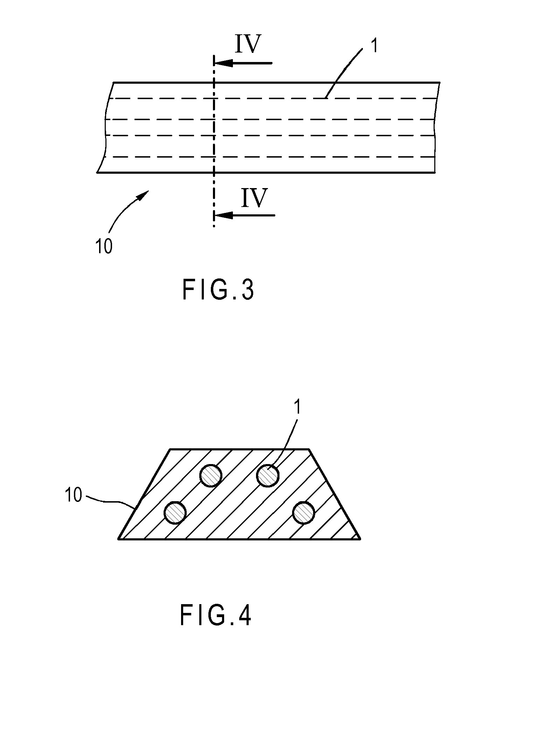

In den Fig. 3 und 4 ist eine Spannbetonschwelle 10 gezeigt, zu deren Herstellung vier recycelte Spanndrähte 1 verwendet wurden. Fig. 3 zeigt einen Abschnitt der Spannbetonschwelle 10 in einer Seitenansicht, Fig. 4 zeigt einen Schnitt entlang der Line IV-IV.

## Patentansprüche

1. Spannbetonschwelle (10) mit in Beton eingebetteten Spanndrähten (1), **dadurch gekennzeichnet, dass** die Spannbetonschwelle (10) aus gebrauchten Schwellen ausgebaute und recycelte Spanndrähte (1) aufweist.

2. Spannbetonschwelle nach Anspruch 1, **dadurch gekennzeichnet, dass** die Spanndrähte (1) an ihren Enden ein Gewinde (6, 7) aufweisen.

3. Spannbetonschwelle nach Anspruch 1 oder 2, **dadurch gekennzeichnet, dass** auf das Gewinde (6, 7) eines Spanndrahts (1) eine Ankerplatte (8) geschraubt ist.

4. Spannbetonschwelle nach Anspruch 3, **dadurch gekennzeichnet, dass** die Ankerplatten (8) direkt, ohne Einsatz von Muttern oder dergleichen, gegen den Gewindeauslauf der Gewinde (6, 7) gekontert sind.

5. Spannbetonschwelle nach einem der vorangehenden Ansprüche, **dadurch gekennzeichnet, dass** die Spannbetonschwellen (10) im Umlaufverfahren mit Spätentschalung hergestellt sind.

6. Spannbetonschwelle nach einem der vorangehenden Ansprüche, **dadurch gekennzeichnet, dass** der Betonkörper der Spannbetonschwelle (10) zumindest teilweise aus recyceltem Betonbruch gebrauchter Schwellen besteht.

7. Verfahren zur Herstellung von Spannbetonschwellen (10), mit den folgenden Schritten:
- Brechen von gebrauchten, ausgebauten Schwellen in einer Recyclinganlage;
- Trennen von Betonbruch und Spanndrähten (1);
- Wiederverwenden recycelter Spanndrähte (1) bei der Herstellung neuer Spannbetonschwellen (10).

8. Verfahren zur Herstellung von Spannbetonschwellen nach Anspruch 7, **dadurch gekennzeichnet, dass** die Spanndrähte (1) an ihren Enden (2, 3) mit einem Gewinde (6, 7) versehen werden.

9. Verfahren zur Herstellung von Spannbetonschwellen nach Anspruch 8, **dadurch gekennzeichnet, dass** Ankerplatten (8) auf die beiden Gewinde (6, 7) eines Spanndrahts (1) geschraubt werden.

10. Verfahren zur Herstellung von Spannbetonschwellen nach Anspruch 9, **dadurch gekennzeichnet, dass** die Ankerplatten (8) direkt, ohne Einsatz von Muttern oder dergleichen, gegen den Gewindeauslauf der Gewinde (6, 7) gekontert werden.

11. Verfahren zur Herstellung von Spannbetonschwellen nach einem der Ansprüche 7 bis 10, **dadurch gekennzeichnet, dass** die Spannbetonschwellen (10) im Umlaufverfahren mit Spätentschalung hergestellt werden.

12. Verfahren zur Herstellung von Spannbetonschwellen nach einem der Ansprüche 7 bis 11, **dadurch gekennzeichnet, dass** ein Teil des recycelten Betonbruchs bei der Herstellung der Spannbetonschwelle (10) verwendet wird.
